(19) Europäisches Patentamt

European Patent Office

Office européen des brevets

(11) Veröffentlichungsnummer: **0 283 730 B1**

(12) **EUROPÄISCHE PATENTSCHRIFT**

(45) Veröffentlichungstag der Patentschrift: **04.11.92**

(21) Anmeldenummer: **88102512.6**

(22) Anmeldetag: **20.02.88**

(51) Int. Cl.⁵: **B63B 41/00**, B63H 9/06, B64C 23/00

(54) **Von Luft oder Wasser umströmter Strömungskörper.**

(30) Priorität: **14.03.87 DE 3708405**

(43) Veröffentlichungstag der Anmeldung:
**28.09.88 Patentblatt 88/39**

(45) Bekanntmachung des Hinweises auf die
Patenterteilung:
**04.11.92 Patentblatt 92/45**

(84) Benannte Vertragsstaaten:
**DE ES FR GB IT NL SE**

(56) Entgegenhaltungen:
**DE-A- 3 519 279**
**FR-A- 2 473 005**
**FR-A- 2 587 675**
**US-A- 3 753 415**

(73) Patentinhaber: **MTB MANÖVRIERTECHNI-**
**SCHES BÜRO**
**Diekbarg 18**
**W-2000 Hamburg 65(DE)**

(72) Erfinder: **Brix, Joachim, Dipl.-Ing.**
**Diekbarg 18**
**W-2000 Hamburg 65(DE)**

(74) Vertreter: **Richter, Werdermann & Gerbaulet**
**Neuer Wall 10**
**W-2000 Hamburg 36(DE)**

EP 0 283 730 B1

**Beschreibung**

Die Erfindung betrifft einen von Luft oder Wasser umströmten Strömungskörper, der einen starren Grundkörper mit einer auf mindestens einer Seite der Grundkörperaußenwandfläche angeordneten, elastischen Membran aufweist, die durch randseitige Befestigung an den Seiten des Strömungskörpers aufgespannt ist, wobei zur Anpassung der äußeren Körperform des Strömungskörpers an den jeweils erforderlichen oder gewünschten Betriebszustand in dem Zwischenraum zwischen der Wandfläche des Strömungskörpers und der Membran ein gasförmiges oder flüssiges Medium, wie Luft, Wasser oder eine Hydraulikflüssigkeit, angeordnet ist.

Der Vorteil gekrümmter Mittellinien ist aus der Segeltechnik, der Luftfahrt und der Strömungsmechanik bekannt. Das dünne Segel bildet ohne die sogenannte Dickenform eine gekrümmte Strömungsfläche mit Druck- und Saugseite. Flugzeugtragflügel bestehen aus einer festen, gekrümmten Mittellinie und einer dem Langstreckenflug angepaßten Dickenform. Bei speziellen Flugzuständen, wie Start und Landung, werden Hochauftriebseigenschaften, d.h. großer Auftrieb bei vergrößertem bzw. großem Widerstand, durch ausfahrbare Vorflügel und Klappen bewirkt, die zu einer vergrößerten Profilkrümmung führen. Alle genannten Konstruktionen werden mechanisch betätigt und bestehen aus ein- oder mehrfachen festen Einzelteilen. Auch Strahlklappen sind mit Erfolg erprobt worden. Die Wirkung des Tragflügels geht aus den superponierbaren Druckverteilungen von Mittellinie und Dickenform und dem Einfluß des Anströmwinkels hervor.

In der Strömungsmechanik werden gekrümmte Mittellinien bei den Leit- und Laufschaufeln von Strömungsmaschinen in Ventilatoren, Kompressoren und Turbinen verwendet. Wegen der starren Konstruktion derartiger Schaufeln ist die Mittellinie unveränderlich.

Auch bei Schiffspropellern werden gekrümmte Mittellinien verwendet, da der Schiffspropeller wie die Laufräder von Strömungsmaschinen als rotierender Tragflügel angesehen werden kann. Der Vorteil gekrümmter Mittellinien wird bei dem notwendigerweise symmetrisch nach beiden Seiten wirkenden Schiffsruder in zahlreichen Konstruktionen genutzt.

Feste gekrümmte Mittellinien sind bei dem CLAUSEN-Dip (Tauch)-Ruder vorgesehen. Dieses CLAUSEN-Dip(Tauch)-Ruder ist ein Heckruder, bestehend aus einem oder mehreren sichelförmigen Tauchkörpern, die in Vertikalrichtung verfahrbar sind, wobei die Eintauchtiefe die Größe der Ruderkräfte bestimmt, und dem herkömmlichen Ruderwinkel entspricht hier die Tauchtiefe. Mechanisch verstellbare Mittellinien verschiedener starrer Ruderteile führen durch externe und/oder interne Anlenkungen zu den Flossenrudern oder dem Zwei-Körper-Rudeer mit Vorflügel.

Durch die DE-A-35 19 279 ist ein Strömungsleitkörper, insbesondere Schwert oder Ballastkiel an einem Segelboot, zum Erzeugen einer im wesentlichen quer zur Strömung gerichteten Kraft mit einer Einrichtung zum Verändern des Profils des Strömungsleitkörpers bekannt, der einen in sich starren Grundkörper aufweist, der zumindest einseitig eine elastische, verformbare Membran trägt, wobei der Zwischenraum zwischen dem Grundkörper und der Membran mit einem Fluid gefüllt ist und die Oberfläche der Membran ein von der Fluidmenge abhängiges Profil bildet. Trägt der Grundkörper beidseitig je eine Membran, dann ist der Grundkörper mit einer Anzahl von Durchgangsöffnungen versehen, die die mit Fluid gefüllten Zwischenräume zwischen den Membranen und dem Grundkörper verbinden. Dieser Strömungsleitkörper arbeitet nach dem Einkammersystem mit selbsttätigem Druckausgleich insofern, als bei einer Druckeinwirkung auf die eine Membran das Fluid durch die Durchgangsöffnungen von der einen Kammer in die andere Kammer gedrückt wird und die diese Kammer begrenzende Membran in ihrem Profil verändert wird. Der Außendruck induziert passiv die Verformungen der Membranen in Abhängigkeit von den unterschiedlichen Druckverhältnissen auf beiden Seiten des Grundkörpers. Hinzu kommt, daß die elastisch verformbare Membran randseitig mit dem Grundkörper befestigt und im symmetrischen Zustand vorgespannt ist, so daß im nicht aktivierten Zustand die jeweils nicht druckbelastete Membran schlapp auf der Grundkörperoberfläche aufliegt und durch Einpumpen und Ablassen von Fluid eine regulierbare aktive Veränderung der Form des Strömungskörpers erfolgt. Der Grundkörper des Strömungskörpers weist keine spezielle Profilgebung, wie gewölbte Wandflächen, auf und die Membran weist im ungedehnten Zustand keine der Formgebung der Grundkörperwandflächen entsprechende Formgebung auf, so daß auch im gedehnten Zustand die Membran nicht die vorgegebene Formgebung beibehält.

Der Erfindung liegt die Aufgabe zugrunde, einen gattungs-gemäßen Strömungskörper zu schaffen, bei dem die Oberfläche der Membran nicht nur ein von der Menge des Druckmediumsx passiv abhängiges Profil bildet, sondern bei dem vermittels eines aktiven Volumenflusses des Druckmediums die Membranprofilierung unter Beibehaltung eines vorgegebenen, um ungedehnten Zustand, dem gewölbten Oberflächenprofil des Strömungskörpers entsprechenden Profils in dosierter Form erfolgt.

Diese Aufgabe wird durch die in dem Patentanspruch 1 gekennzeichneten Merkmale gelöst.

Hiernach ist eine Flugzeugtragfläche geschaffen, an der bei einer entsprechenden Profilgebung der Membran durch Einpumpen des Druckmediums eine Oberfläche ausgebildet wird, die stufenlos bei jeder Stellung der Klappe und/oder Vorflügel in die Oberfläche der Klappe und/oder Vorflügel übergeht.

Aufgrund einer derartigen Ausgestaltung eines Strömungskörpers, der auch ein Schiffsruder, den Einlauf einer Wasserturbine, eine durchströmte Düse, ein Hinterschiff oder ein starres profiliertes Segel darstellen kann, ist das gemeinsame Merkmal aller dieser Ausführungsformen die regulierbare, elastische Überführung eines Strömungskörpers in einen Strömungskörper mit veränderter Berandung zur Erzeugung von örtlichen übergeschwindigkeiten und demzufolge regulierbarer Unterdruckfelder, und zwar unter Beibehaltung des vorgegebenen Membranprofils, das dem Oberflächenprofil des Trägerkörpers entspricht, wozu ein fester Trägerkörper mit einer von innen durch überdruck gespannten Membran verwendet wird. Zwischen dem Strömungskörper als Festkörper und der Membran wird unter Druck ein komprimiertes Medium, beispielsweise Luft, Wasser oder Hydraulikflüssigkeit, eingepumpt, die zu einer veränderten äußeren Körperberandung und damit zu einer dem erwünschten Betriebszustand angepaßten äußeren Körperform führt. Hieran führt das vorbeigeströmte Medium, wie Luft oder Wasser, zu über- und Unterdruckfeldern, die dem technischen Einsatzzweck förderlich sind und bei Bedarf durch den überdruck zwischen Festkörper und Membran regelbar sind.

Mit einem derart ausgebildeten Strömungskörper wird durch einen aktiven Volumenfluß mit einem Druckmedium vermittels einer dosierbaren Menge eine beliebige oder gewünschte Dehnung der im Normalzustand ein vorgegebenes Profil aufweisenden Membran erhalten, und zwar über ein am Strömungskörper ausgebildetes Zweikammernsystem, ohne daß dabei die beiden Kammern über Kanäle miteinander verbunden sind. Jede Kammer ist für sich getrennt ausgebildet und arbeitet auch unabhängig von der anderen Kammer, so daß auf beiden Seiten des Strömungskörpers Membranen mit unterschiedlichen Profilen geschaffen werden können. Jede Kammer ist für sich getrennt aktiv beeinflußbar.

Vorteilhafte Ausgestaltungen der Erfindung sind in den Unteransprüchen gekennzeichnet.

Ausführungsbeispiele der Erfindung werden nachstehend anhand der Zeichnung näher erläutert. Es zeigen

Fig. 1 in einem waagerechten Schnitt einen Strömungskörper mit einer ausgedehnten Membran,

Fig. 2 in einem senkrechten Schnitt einen konventionellen Strömungskörper mit einer ausgedehnten Membran zur Ausbildung einer zusätzlichen Dickenform,

Fig. 3 einen senkrechten Querschnitt durch eine als Strömungskörper ausgebildete Flugzeugtragfläche mit angelenkter Klappe und Vorflügel mit gerader Mittellinie,

Fig. 4 einen senkrechten Querschnitt der Flugzeugtragfläche nach Fig. 3 mit gekrümmter Mittellinie und

Fig. 5 einen senkrechten Querschnitt der Flugzeugtragfläche nach Fig. 4 bei größeren Anstellwinkeln der Hilfsflügel.

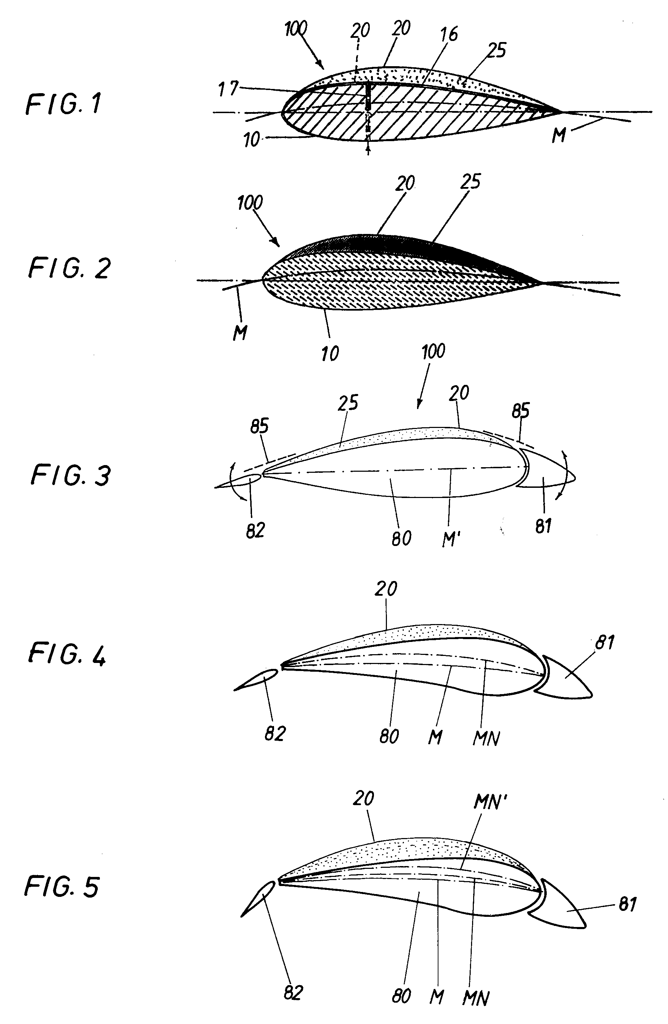

In den Fig. 2, 3, 4 und 5 ist ein Strömungskörper mit 100 bezeichnet, der aus einem Grundkörper 10 besteht, der verschiedenartig ausgebildet sein kann, nämlich als Schiffsruder, als Hinterschiff eines Schiffes, als starres, profiliertes Segel eines Segelschiffes und als von einem Medium durchströmte Düse 50 und als Flugzeugtragfläche 80.

Entsprechend Fig. 1 und 2 ist an der Außenwandfläche 16 des Grundkörpers 10 eine Membran 20 angeordnet und auf dieser Wandfläche 16 durch Randbefestigung auf diese aufgespannt. Im Nichtbetriebszustand liegt die Membran 20 dicht wie ein Farbanstrich an der Außenwandfläche des Grundkörpers 10 an und bläht sich beim Einführen des Druckmediums in die in Fig. 1 gezeigte Stellung auf. Die Membran 20 weist z.B. im ungedehnten Zustand eine Form auf, die der Formgebung der Wandfläche 16 entspricht. Im gedehnten Zustand behält die Membran 20 die vorgegebene Form, d.h. eine eintretende Dehnung der Membran 20 erstreckt sich gleichmäßig auf den gesamten Flächenbereich der Membran, so daß im gedehnten Zustand (Fig. 1) die Membran 20 in etwa diejenige Form einnimmt, die der Formgebung der Wandfläche 16 entspricht. Wie Fig. 1 zeigt, ist die Wandfläche 16 leicht gekrümmt verlaufend ausgebildet; eine entsprechende Gestaltung weist auch die Membran 20 auf. Die Membran 20 weist eine Formgebung auf, aufgrund der die Membran im gedehnten Zustand nicht in eine unkontrollierte Formgebung übergeht, sondern eine Formgebung einnimmt, wie diese aus Fig. 1 ersichtlich ist.

Die Membran 20 besteht aus elastischen, gut dehnbaren Werkstoffen, wie Gummi oder gummiähnlichen Werkstoffen, wobei auch Folienzuschnitte aus geeigneten Kunststoffen Verwendung finden können, wobei jedoch Voraussetzung ist, daß diese Kunststoffolien die erforderlichen Dehnungseigenschaften besitzen. Durch abschnittsweise in der Membran 20 angeordnete Versteifungen oder durch verschiedene Membrandicken, also verschiedene Membrandicken in verschiedenen Membranbereichen, kann die Formgebung im gedehnten Zustand der Membran vorgegeben werden. Die Membran 20 selbst kann auf einen in der Zeichnung nicht dargestellten Rahmen aufgespannt sein, der dann mit der Außenwandfläche 16 des Grundkörpers 10 oder überhaupt des Strömungskörpers 100 befestigt ist. Die Membran ist dabei dann so ausgebildet, daß sie sich bei Schrägan-Strömung dem jeweils entstehenden Druckfeld anpaßt. Die Ausdehnung der auf der Außenwandfläche 16 des Schiffsruders 10 angeordneten Membran 20 wird durch Einführen eines Druckmediums in den Zwischenraum 25 zwischen der Außenwandfläche 16 des Grundkörpers 10 und der Membran 20 erreicht. Die Zuführung des Druckmediums erfolgt über eine in der Zeichnung nicht dargestellte Zuführungsleitung, über die vermittels einer Pumpe das Druckmedium in den Zwischenraum 25 gedrückt wird. Eine Ableitung ist dann noch vorgesehen. Der Fluß des Druckmediums wird über ein Steuerventil geregelt. Soll in dem Zwischenraum 25 befindliches Druckmedium aus dem Zwischenraum 25 abgesogen werden, dann erfolgt durch entsprechende Umschaltung des Steuerventils und der Pumpe eine Rückführung des Druckmediums aus dem Zwischenraum 25. Das rückgeführte Druckmedium wird dann über die Pumpe in einen in der Zeichnung nicht dargestellten Vorratsbehälter gedrückt, aus dem auch das Druckmedium entnommen wird, wenn Druckmedium in den Zwischenraum 25 eingeführt werden soll.

Die Zuführung des Druckmediums in den Zwischenraum 25 zwischen der Außenwandfläche 16 des Grundkörpers 10 und der Membran 20 kann über eine einzige Zuführungsleitung erfolgen, über die auch sich im Zwischenraum 25 befindliches Druckmedium bei entsprechender Umschaltung der Pumpe abgesogen werden kann. Um jedoch eine gleichmäßige Dehnung der Membran 20 zu erreichen, ist es vorteilhaft, wenn das Druckmedium über eine größere Anzahl von Zuführungskanälen dem Zwischenraum 25 zugeführt wird, wobei dann die Öffnungen dieser Zuführungskanäle in der Außenwandfläche 16 liegen. Es besteht auch die Möglichkeit, die die Membran 20 tragende Wandfläche 16 des Grundkörpers 10 doppelwandig auszubilden. Die Außenwand kann dann mit einer Vielzahl von Durchbrechungen (Perforation) versehen sein. In den Zwischenraum dieser doppelwandigen Ausgestaltung wird dann das Druckmedium eingeführt, welches über die Durchbrechungen in der Außenwandfläche dann in den Zwichenraum 25 zwischen dieser Außenwandfläche und der Membran eingedrückt wird. Aufgrund dieser Ausgestaltung ist eine gleichmäßige Zuführung des Druckmediums gewährleistet.

Die Membran 20 ist auf der Außenwandfläche 16 des Grundkörpers 10 so angeordnet, daß ein allseitig geschlossener Zwischenraum 25 zwischen der Außenwandfläche 16 und der Membran erhalten wird. Der jeweils erforderliche Innendruck entspricht im wesentlichen dem hierdurch bewirkten äußeren Strömungsdruck und der Membranspannung. Durch diese elastische Deformation des Profilschnitts entsteht eine gekrümmte Mittellinie M (Fig. 1 und 2) und somit eine über die Pumpe und das Steuerventil sehr emfpindlich pneumatisch oder hydraulisch regulierbare Druckverteilung um das Profil.

Unter der gekrümmten Mittellinie M wird verstanden, daß bei Schräganströmung eine beliebig beeinflußbare Druckverteilung bei stoßfreiem Eintritt des gasförmigen oder flüssigen Mediums, also des Fluids, erfolgt. Die Mittellinie ist aktiv und pneumatisch veränderbar. Die Durckverteilung bewirkt als Druckintegral über die Fläche eine senkrecht zur Anströmung gerichtete Auftriebskraft.

Als zusätzliche Start- oder Landehilfe wird die Oberseite eines Tragflügels dann mit einer elastischen Membran 20 bespannt und durch geeignete Steuerkanäle aktiviert. Hierdurch wird die Profilkrümmung und damit der Auftrieb beträchtlich vergrößert und durch Abschalten der Druckzufuhr selbsttätig in den festen Tragflügel übergeführt.

Bei dem in Fig. 3 gezeigten Ausführungsbeispiel ist der Strömungskörper 100 als Flugzeugtragfläche 80 mit gerader Mittellinie M' ausgebildet, die mit einem Vorflügel 81 und mit einer Klappe 82 versehen ist und auf ihrer Oberfläche eine vorgespannte Membran 20 aufweist, die durch Einpumpen des gasförmigen oder flüssigen Mediums in den Zwischenraum 25 zwischen der Flugzeugtragfläche 80 und der Membran 20 in eine in der Krümmung gegenüber der durch die Flugzeugtragfläche 80 verlaufenden Basismittellinie M' veränderte oder über die Flugzeugtragfläche 80 verlaufende, asymmetrische Mittellinie übergeführt wird, wobei vermittels der angestellten Membran 20 zwischen der Oberseite der Flugzeugtragfläche bzw. der Oberfläche der gekrümmten Membran und der Klappe 82 und/oder dem Vorflügel 81 bei jeder Klappen- und/oder Vorflügelstellung ein stufenloser Übergang ausbildbar ist.

Bei 85 sind die stufenlosen Übergänge zwischen der Flugzeugtragfläche 80, dem Vorflügel 81 und der Klappe 82 angedeutet.

fig. 4 zeigt die Flugzeugtragfläche 80 nach Fig. 3 bei einer gekrümmten Basismittellinie M und die entsprechende Krümmung der Membran 20, die erforderlich ist, um einen stufenlosen (strakenden) Übergang 85 der Profilkonturen von Vorflügel 81, Tragflügel 80 und Klappe 82 zu erreichen, wobei die von der Basismittellinie M abweichende, neue gekrümmte Mittellinie mit MN bezeichnet ist.

Fig. 5 zeigt die Flugzeugtragfläche 80 nach Fig.4 bei größeren Anstellwinkeln der Hilfsflügel 81,82 und die pneumatsich entsprechend veränderte Profilform zur Erzeugung einer stetig veränderl ichen Profilkrümmung, wobei die neu geschaffene Mittellinie mit MN' bezeichnet ist.

## Patentansprüche

1. Von Luft oder Wasser umströmter Strömungskörper (100), der einen starren Grundkörper (10) mit einer auf mindestens einer Seite der Grundkörperaußenfläche angeordneten, elastischen Membran (20) aufweist, die durch randseitige Befestigung an den Seiten des Strömungskörpers aufgespannt ist, wobei zur Anpassung der äußeren Körperform des Strömungskörpers an den jeweils erforderlichen oder gewünschten Betriebszustand in dem Zwischenraum (25) zwischen der Wandfläche (16) des Strömungskörpers und der Membran (20) ein gasförmiges oder flüssiges Medium, wie Luft, Wasser oder eine Hydraulikflüssigkeit, angeordnet ist, dadurch gekennzeichnet, daß der Strömungskörper (100) als Flugzeugtragfläche (80) ausgebildet ist, die mit einem Vorflügel (81) und mit einer Klappe (82) versehen ist und auf ihrer Oberfläche eine vorgespannte Membran (20) aufweist, die durch Einpumpen des gasförmigen oder flüssigen Mediums in den Zwischenraum (25) zwischen der Flugzeugtragfläche (80) und der Membran (20) in eine in der Krümmung gegenüber der durch die Flugzeugtragfläche (80) verlaufenden, gekrümmten Basismittellinie (M) veränderte oder über die Flugzeugtragfläche (80) verlaufende asymmetrische Mittellinie übergeführt wird, wobei vermittels der angestellten Membran (20) zwischen der Oberseite der Flugzeugtragfläche bzw. der Oberfläche der gekrümmten Membran und der Klappe (82) und/oder dem Vorflügel (81) bei jeder Klappen- und/oder Vorflügelstellung ein stufenloser Übergang ausbildbar ist, wobei die Membran (20) im ungedehnten Zustand an der Außenwandfläche (16) des Grundkörpers (10) anliegend ist und eine der Form der Außenwandfläche (16) des Grundkörpers entsprechende Formgebung aufweist, wobei im gedehnten Zustand der Membran (20) die Membrandehnung sich über die gesamte Fläche der Membran gleichmäßig oder durch die Verwendung von Membranabschnitten mit unterschiedlicher Dicke ungleichmäßig verteilt erstreckend ist.

2. Strömungskörper nach Anspruch 1, dadurch gekennzeichnet, daß die elastische Membran (20) aus Gummi, einem elastischen, gummiartigen Werkstoff od.dgl. besteht, dessen Materialdicke oder -konsistenz der gewünschten Wölbung angepaßt ist.

3. Strömungskörper nach Anspruch 1 und 2, dadurch gekennzeichnet, daß von einem Trägerkörper, wie Flugzeugtragfläche (80), für den Strömungskörper (100) ein regulierbares, ein- oder beidseitig einsetzbares Druckmedium, wie Wasser, Preßluft oder Hydraulikflüssigkeit, verwendet wird.

4. Strömungskörper nach Anspruch 1 bis 3, dadurch gekennzeichnet, daß für die Zufuhr des Druckmediums in den Zwischenraum (25) zwischen der Wandfläche (16) und dem Grundkörper (10) des Strömungskörpers (100) und der Membran (20) über eine perforierte Beplattung der die Membran (20) tragenden Wandfläche (16) des Grundkörpers (10) und über eine in diesem angeordnete Zuführungsleitung oder über eine Anzahl von Kanälen (17) mit in der der Membran (20) zugekehrten Wandfläche (16) des Grundkörpers (10) liegenden Öffnungen erfolgt.

5. Strömungskörper nach Anspruch 1 bis 4, dadurch gekennzeichnet, daß die Membran (20) um einen Rahmen aufgespannt ist und sich bei Schräganströmung dem entstehenden Druckfeld anpaßt.

6. Strömungskörper nach einem der vorangegangenen Ansprüche 1 bis 5, dadurch gekennzeichnet, daß die Membran (20) unter Ausbildung eines oberen Membranteils (120) und eines unteren Membranteils (120a) geteilt ist, wobei der obere Membranteil (120) an der einen Außenwandfläche des Grundkörpers (10) und der untere Membranteil (120a) an der anderen Außenwandfläche des Grundkörpers (10) zum Zwecke einer asymmetrischen Betätigung in den membranbespannten Teilen des Grundkörpers und zur Erzeugung eines der Strömung angepaßten verwundenen Profils angeordnet ist.

## Claims

1. Aerodynamic body (100) surrounded by air or water which has a rigid basic member (10) with an elastic diphragm (20) disposed on at least one side of the the basic member exterior, which, by means of being marginally attached, is unfolded on the sides of the aerodynamic body, in which, for the adaptation of the external bodily configuration of the aerodynamic body to the in each case requisite or desired operational state, in the interspace (25) between the wall area (16) of the aerodynamic body and the diaphragm (20), a gaseous or liquid medium, such as air or water or a hydraulic fluid, is disposed, characterized in that the aerodynamic body (100) is constructed in the form of an aircraft wing (80) which is provided with a slat (81) and a flap (82) and, on its surface, possesses an initially stressed diaphragm (20) which, by pumping the gaseous or liquid medium into the interspace (25) between the aircraft wing (80) and the diaphragm (20), is converted into an assymetric center line changed in its curvature in comparison with the curved basic center line (M) proceeding through the aircraft wing (80) or proceeding across the aircraft wing (80), in which, by means of the inclined diaphragm (20) between the top side of the aircraft wing or the surface of the curved diaphragm and the flap (82) and/or the slat (81), in each flap or slat position, a continuous transition can be formed in which the diaphragm (20), in the non-elongated state, bears against the outer wall area (16) of the basic member (10) and possesses a configuration corresponding to the shape of the outer wall area (16) of the basic member, while in the elongated state of the diaphragm (20), the diaphragm elongation extends uniformly over the entire diaphragm surface or, by the employment of diaphragm sections having various thicknesses, extends in a non-uniform manner.

2. Aerodynamic body according to Claim 1, characterized in that the elastic diaphragm (20) is comprised of rubber, an elastic, rubber-like material or the like, whose material thickness or consistency is adapted to the desired curvature.

3. Aerodynamic body according to Claims 1 and 2, characterized in that, from a supporting body such as an aircraft wing (80), a controllable pressure medium which can be employed on one or both sides, such as water, compressed air or hydraulic fluid is used for the aerodynamic body (100).

4. Aerodynamic body according to Claims 1 to 3, characterized in that, for the supply of the pressure medium into the interspace (25) between the wall area (16) and the basic member (10) of the aerodynamic body (100) and the diaphragm (20) is effected via a perforated plating of the wall area (16) suppprting the diaphragm (20) of the basic member (10) and via a supply pipe disposed in the latter or via a plurality of channels (17) with apertures located in the wall area (16) of the basic member (10) facing the diaphragm (20).

5. Aerodynamic body according to Claims 1 to 5, characterized in that the diaphragm (20) is mounted spread out on a frame and, in the event of an oblique oncoming flow, adapts to the resulting pressure area.

6. Aerodynamic body according to any of the preceding Claims 1 to 5, characterized in that the diaphragm (20) is divided by the formation of an upper diaphragm portion (120) and a lower diaphragm portion (120a), wherein the upper diaphragm portion (120) is disposed on the one outer wall area of the basic member (10) and the lower diaphragm portion (120a) on the other outer wall area of the basic member (10) for the purpose of an assymetric actuation in the diaphragm-covered parts of the basic member and for the production of a twisted contour adapted to the flow.

**Revendications**

1. Corps aérodynamique entouré d'air ou d'eau (100) qui présente un corps de base rigide (10) avec une membrane élastique (20), placée sur au moins un côté de la face extérieure du corps de base, qui est tendue par une fixation sur les bords, sur les côtés du corps aérodynamique, un agent gazeux ou liquide, comme de l'air, de l'eau ou un liquide hydraulique étant placé dans l'espace intermédiaire (25) entre la face de la paroi (16) du corps aérodynamique et la membrane (20) pour adapter la forme extérieure du corps aérodynamique à l'état de fonctionnement respectivement nécessaire ou souhaité, **caractérisé en ce** que le corps aérodynamique (100) est configuré comme surface portante d'avion (80) qui est pourvue d'un bec mobile (81) et d'un abattant (82) et qui présente, sur sa surface, une membrane (20) tendue qui est transformée en une ligne de milieu qui est modifiée dans la courbure par rapport à la ligne de milieu de la base (M) courbée qui traverse la surface portante d'avion (80) ou en une ligne de milieu asymétrique qui passe sur la surface portante d'avion (80) par pompage de l'agent gazeux ou liquide dans l'espace intermédiaire (25) entre la surface portante d'avion (80) et la membrane, une transition continue pouvant être configurée pour chaque position d'abattant et/ou de bec mobile à l'aide de la membrane (20) mise en place entre la face supérieure de la surface portante d'avion ou la surface de la membrane courbée et l'abattant (82) et/ou le bec mobile (81), la membrane (20) adhérant, à l'état non étendu, à la face de la paroi extérieure (16) du corps de base (10) et présentant une conformation correspondant à la forme de la face de la paroi extérieure (16) du corps de base, l'allongement de la membrane s'étendant, lorsque la membrane (20) est à l'état étendu, en étant réparti de façon uniforme sur toute la surface de la membrane ou de façon irrégulière par l'utilisation de sections de membrane de différentes épaisseurs.

2. Corps aérodynamique selon la revendication 1, **caractérisé en ce** que la membrane élastique (20) est en caoutchouc, en une matière élastique du type caoutchouc ou équivalent dont l'épaisseur ou la consistance de la matière est adaptée à la voussure souhaitée.

3. Corps aérodynamique selon la revendication 1 ou 2, **caractérisé en ce** qu'un agent de pression réglable, utilisable d'un ou de deux côtés, comme de l'eau, de l'air comprimé ou un liquide hydraulique, est utilisé par un corps porteur, tel qu'une surface portante d'avion (80), pour le corps aérodynamique (100).

4. Corps aérodynamique selon les revendications 1 à 3, **caractérisé en ce** que l'amenée de l'agent de pression dans l'espace intermédiaire (25) entre la face de paroi (16) et le corps de base (10) du corps aérodynamique (100) et la membrane (20) se fait par un placage perforé de la face de paroi (16) du corps de base (10) qui porte la membrane (20) et par une conduite d'amenée placée dans celui-ci ou par un certain nombre de canaux (17) avec des orifices qui se situent dans la face de paroi (16) du corps de base (10) tournée vers la membrane (20).

5. Corps aérodynamique selon les revendications 1 à 4, **caractérisé en ce** que la membrane (20) est étendue autour d'un cadre et qu'elle s'adapte, lors d'un afflux oblique, au champ de pression qui se constitue.

6. Corps aérodynamique selon l'une des revendications précédentes 1 à 5, **caractérisé en ce** que la membrane (20) est divisée en formant une partie supérieure de membrane (120) et une partie inférieure de membrane (120a), la partie supérieure de la membrane (120) étant placée sur l'une des faces de paroi extérieure du corps de base (10) et la partie inférieure de la membrane (120a) étant placée sur l'autre face de paroi extérieure du corps de base (10) pour obtenir un actionnement asymétrique dans les parties du corps de base recouvertes de membrane et pour produire un profil gauchi adapté au courant.

FIG. 1

FIG. 2

FIG. 3

FIG. 4

FIG. 5